# FASCICULE DE BREVET EUROPEEN

(11) **EP 3 915 870 B1**
(45) Date de publication et mention de la délivrance du brevet: **12.10.2022**
(21) Numéro de dépôt: 21174051.9
(22) Date de dépôt: 17.05.2021
(51) Int. Cl.: B64C 1/14, B64C 1/32, B64C 27/04, F16B 21/12

(54) **DISPOSITIF DE LARGAGE D'UN PANNEAU D'AÉRONEF ET AÉRONEF ASSOCIÉ**
VORRICHTUNG ZUM ABWURF EINES FLUGZEUGPANEELS UND ENTSPRECHENDES FLUGZEUG
DEVICE FOR RELEASING A PANEL OF AN AIRCRAFT AND ASSOCIATED AIRCRAFT

(30) Priorité: 28.05.2020 FR 2005659
(43) Date de publication de la demande: 01.12.2021
(73) Titulaire: Airbus Helicopters, 13725 Marignane Cedex (FR)
(72) Inventeur: PENELLA, Daniel, 13660 ORGON (FR)
(74) Mandataire: GPI Brevets

(56) Documents cités:
- EP-A1- 0 019 024
- EP-A1- 3 476 718
- WO-A1-99/07600
- WO-A1-2017/208157
- FR-A1- 2 766 156
- US-A- 4 220 298
- US-A- 5 324 152
- US-A1- 2008 038 081

## Description

La présente invention se rapporte au domaine des aéronefs tels que notamment des avions ou des giravions. De tels aéronefs comportent généralement des portes, des parois ou des hublots pour fermer une ouverture ménagée dans un fuselage. A des fins de simplification rédactionnelle, le terme de « panneau » utilisé par la suite dans la présente demande peut ainsi désigner une porte, une paroi ou un hublot et être en tout ou partie transparent ou translucide.

En cas d'accident de l'aéronef, un tel panneau doit être le plus rapidement possible ouvert ou escamoté pour permettre à l'équipage et/ou aux passagers de l'aéronef de sortir de l'aéronef.

Ainsi, il est connu d'équiper de tels panneaux avec des moyens de secours permettant leur escamotage.

Le document WO9907600 décrit par exemple des moyens de secours présentant des loquets. Des câbles permettent d'actionner ces loquets mobiles en rotation ou en translation par rapport à un cadre solidarisé au fuselage ou à une structure de l'aéronef. Un actionneur est par ailleurs relié aux câbles et permet d'exercer un effort de traction sur les câbles.

De tels loquets sont ainsi mobiles entre une position de travail dans laquelle ils permettent de maintenir en position le panneau pour fermer l'ouverture de manière étanche et une position escamotée dans laquelle le panneau peut être repoussé manuellement par une personne.

Cependant, lorsque les loquets sont agencés dans leurs positions escamotées, il faut donc après un accident de l'aéronef qu'une personne ait une force physique suffisante pour repousser et éventuellement soulever le panneau. En outre, un tel panneau peut présenter une masse importante ne permettant pas à une personne blessée ou à un enfant de le repousser facilement à l'extérieur de l'aéronef.

Par ailleurs, tel que décrit dans le document FR 2766156 il a également été conçu un autre type de moyens de secours permettant de réaliser un escamotage d'un hublot par découpe d'un joint d'étanchéité agencé à la périphérie de ce hublot.

Le document FR 3072937 décrit quant à lui des moyens de secours comportant une clé de largage et un joint particulier agencé à la périphérie d'un hublot. Un tel joint est configuré pour permettre à une personne d'éjecter manuellement le hublot en cas d'accident de l'aéronef. Cette éjection est alors opérée en appliquant une force sensiblement perpendiculairement par rapport à la surface interne du panneau.

Le document GB 526648 décrit un autre moyen de secours permettant d'actionner une porte de secours pivotante au moyen d'un levier. En cas d'accident, une personne doit alors exercer un effort manuel sur ce levier pour pouvoir sortir de l'aéronef.

En outre, le document EP 0 019 024 un dispositif permettant de larguer un panneau équipant un support d'un véhicule tel un bus ou un wagon pour le transport de passager.

Un tel dispositif comporte notamment quatre organes éjecteurs permettant un largage rapide du panneau au moyen de goupilles coopérant avec des tenons. De telles goupilles sont actionnées au moyen de câbles reliés à deux poignées actionnables respectivement de l'extérieur et de l'intérieur du véhicule.

Les organes éjecteurs comportent également des ressorts hélicoïdaux agencés autour des tenons. Chaque ressort prend appuis au niveau d'une première extrémité sur une goupille et au niveau d'une seconde extrémité sur le support du véhicule.

Un tel dispositif doit alors être assemblé directement sur le véhicule et ne peut constituer un ensemble pré-monté.

La présente invention a alors pour objet de proposer un dispositif de largage d'un panneau permettant de s'affranchir des limitations mentionnées ci-dessus. Ce dispositif de largage d'un panneau est en effet optimisé pour nécessiter une force d'actionnement minimale afin d'éjecter le panneau initialement agencé au niveau de l'ouverture.

Un autre objet de l'invention est pouvoir assembler facilement et rapidement le dispositif de largage sur un support.

L'invention se rapporte donc à un dispositif de largage d'un panneau d'aéronef, selon la revendication 1, le dispositif étant configuré pour être solidarisé à un support, le support présentant une ouverture et le dispositif étant rapporté en recouvrement d'une périphérie de l'ouverture, le dispositif comportant :
un panneau configuré pour être agencé au moins en regard de l'ouverture,
- au moins deux organes éjecteurs, chacun des au moins deux organes éjecteurs comportant :
   - un tenon s'étendant suivant une direction longitudinale orientée perpendiculairement par rapport au panneau,
   - un ressort précontraint en compression suivant la direction longitudinale, le ressort étant agencé coaxialement autour du tenon et,
   - une goupille amovible coopérant avec le tenon, la goupille amovible étant configurée pour d'une part, dans une position de travail, maintenir en position le tenon et permettre au panneau d'être solidarisé au support et d'autre part, dans une position de largage, libérer le tenon,
- au moins un lien relié aux goupilles amovibles des au moins deux organes éjecteurs, et
- au moins un organe de commande pour exercer un effort de traction sur le ou les liens et pour agencer simultanément dans leurs positions de largage respectives les goupilles amovibles des au moins deux organes éjecteurs.

Autrement dit, le dispositif est destiné à être solidarisé au support par exemple par collage, serrage et/ou rivetage. Le panneau est alors positionné en recouvrement de l'ouverture du support au niveau d'une face externe de l'aéronef.

Un tel panneau peut être par exemple formé dans un matériau opaque. Alternativement, le panneau peut comporter un hublot en tout ou partie transparent ou translucide et/ou présenter une sérigraphie ou un film agencé sur la périphérie permettant de masquer les moyens de solidarisation du dispositif sur le support. En outre, un tel panneau peut se présenter sous différentes formes et peut être formé par une porte ou une trappe.

Des organes éjecteurs sont alors répartis par exemple au niveau d'au moins deux cotés opposés du panneau. De tels organes éjecteurs peuvent, si nécessaire en cas d'accident de l'aéronef, permettre de libérer et de larguer le panneau initialement maintenu en position sur le support de l'aéronef.

De tels organes éjecteurs sont simultanément actionnés grâce à un ou aux organes de commande et à un ou plusieurs liens reliés aux goupilles amovibles de chaque organe éjecteur.

Les liens peuvent avantageusement comporter des câbles métalliques, des fils, des gaines, des tiges ou des tringles. Des systèmes de réglage de la tension des liens peuvent également être utilisés pour faciliter le réglage et la synchronisation de l'actionnement simultané des différents organes éjecteurs.

Par ailleurs, des liens distincts peuvent être agencés en parallèles en comportant chacun une première extrémité reliée à un même organe de commande. Au moins une seconde extrémité des liens coopère respectivement avec une goupille amovible qui lui est propre.

Selon une autre variante, un seul lien peut être utilisé ou plusieurs liens peuvent être agencés en série les uns avec les autres. Dans ce cas, un premier lien peut coopérer avec l'organe de commande et une première goupille amovible et un deuxième lien peut être agencé entre la première goupille amovible et une seconde goupille amovible.

Selon l'invention, un tel dispositif est remarquable en ce qu'il comporte un cadre configuré pour être solidarisé au support, le cadre étant interposé entre le support et le panneau, les ressorts des au moins deux organes éjecteurs étant respectivement agencés entre le cadre et le panneau.

Les ressorts sont donc comprimés entre le cadre et le panneau lorsque le panneau est fixé au cadre. Les ressorts permettent de participer à l'éjection du panneau lorsque les goupilles amovibles sont déplacées respectivement depuis leurs positions de travail vers leurs positions de largage.

Une extrémité des tenons émergeant à l'extérieur de l'aéronef peut comporter une tête fraisée ou bombée coopérant avec une rondelle cuvette positionnée entre la tête fraisée ou bombée et le panneau.

De plus, le ou les tenons peuvent traverser un premier orifice ménagé dans le panneau puis un deuxième orifice ménagé dans le cadre.

Selon une alternative, le ou les tenons peuvent également être directement formés dans le matériau du panneau. Dans ce cas, le ou les tenons ne traversent alors qu'un seul orifice ménagé dans le cadre.

Quel que soit le mode de réalisation des tenons, le cadre peut avantageusement être formé en matériau composite et être conformé pour épouser une forme externe du support de l'aéronef. En outre, un boisseau renfort peut également être solidarisé au cadre de manière à permettre un réglage de l'affleurement ou du dés-affleurement entre le panneau et la face externe de l'aéronef.

Un tel dispositif de largage d'un panneau d'aéronef présente notamment l'avantage d'être livré pré-monté et rapporté ensuite directement sur un support. Le cadre est ainsi solidarisé avec le support et les joints d'étanchéité sont d'ores et déjà agencés entre le cadre et le panneau. Seul un réglage de l'affleurement du panneau par rapport à la face externe de l'aéronef peut être opéré.

En outre un ou plusieurs joints d'étanchéité peuvent être intercalés entre le cadre et le panneau pour garantir une étanchéité au niveau de cette liaison. Par exemple des joints à boudins et/ou à lèvres peuvent être utilisés pour réaliser une telle étanchéité.

D'autres moyens d'étanchéités peuvent également agencés dans le premier orifice du panneau et dans le second orifice du cadre pour garantir une étanchéité avec les tenons.

Selon un premier mode de réalisation, le ou les organes de commande peuvent être configurés pour être actionnés manuellement.

En outre un tel dispositif de largage peut permettre à toute personne, et ce, quelle que soit sa force physique, d'actionner le largage d'un panneau initialement solidarisé avec le support. Le dispositif de largage est ainsi configuré pour que la force nécessaire à l'actionnement des goupilles amovibles avec l'organe de commande soit prédéterminée et préférentiellement minimale.

Avantageusement, le ou les organes de commande peuvent comporter un levier présentant degré de mobilité en rotation par rapport au cadre.

Autrement dit, un tel levier est agencé en liaison de type pivot avec le cadre. Des moyens de guidage en rotation tels des paliers ou des bagues peuvent alors être interposés entre le levier et le cadre.

Selon un second mode de réalisation, le ou les organes de commande peuvent comporter au moins un actionneur configuré pour être piloté à distance.

Un tel actionneur peut être piloté par exemple par une consigne de commande électrique, hydraulique ou pneumatique. Cette consigne de commande peut alors être générée automatiquement par un système de sécurité ayant détecté un événement tel un atterrissage d'urgence notamment ou encore manuellement par une pression exercée par un pilote de l'aéronef sur un bouton de commande distant par rapport au dispositif de largage.

En outre, les deux modes de réalisation peuvent avantageusement être combinés entre eux et permettre à la fois un largage manuel du panneau par l'actionnement d'un levier positionné à proximité du panneau ainsi qu'un largage piloté à distance au moyen d'un actionneur par exemple à commande électrique.

Avantageusement, l'une au moins des goupilles amovibles peut comporter une portion sécable, cette portion sécable étant configurée pour être cassée à partir d'une valeur de seuil prédéterminée de l'effort de traction. Lorsque la ou les portions sécables sont cassées, la ou les goupilles amovibles peuvent passer respectivement de leurs positions de travail à leurs positions de largage.

Une telle portion sécable permet ainsi de contrôler visuellement l'intégrité de tous les organes éjecteurs. Cette portion sécable permet en outre également de maintenir une goupille amovible en position de travail quelles que soient les sollicitations et vibrations auxquelles est soumis l'aéronef. De plus, la forme, le matériau et les dimensions d'une portion sécable permettent d'adapter la force nécessaire à l'actionnement d'au moins une des goupilles amovibles équipée de cette portion sécable.

Selon un autre aspect de l'invention, la ou les goupilles amovibles peuvent comporter chacune deux extrémités libres, chaque portion sécable étant solidarisée avec les deux extrémités libres une fois la ou les goupilles amovibles agencées dans leurs positions de travail.

Ainsi selon le type de tenon équipant le dispositif, différents types de goupilles amovibles complémentaires peuvent être utilisés.

Selon un premier exemple de réalisation de l'invention, l'un au moins des tenons peut comporter au moins une gorge circulaire agencée au niveau d'une face cylindrique externe du tenon. Pour positionner la ou les goupilles amovibles dans leurs positions de travail respectives, les deux extrémités libres peuvent alors être insérées respectivement dans la gorge circulaire du ou des tenons.

Eventuellement, la ou les goupilles amovibles peuvent être formées par un matériau élastique, notamment un fil métallique ou une tôle fine. Dans ce cas, pour positionner la ou les goupilles amovibles dans leurs positions de travail respectives, la ou les goupilles se déforment pour permettre l'insertion des deux extrémités libres dans la gorge circulaire du ou des tenons. Les deux extrémités libres s'écartent l'une de l'autre puis se rapprochent de manière à empêcher une extraction du tenon avec lequel elles coopèrent. Les goupilles amovibles peuvent avoir une forme de lyre ou d'Oméga, leur forme ressemblant à celle de la lettre grecque "Ω".

Une fois la gorge circulaire traversée par les deux extrémités libres, une portion sécable peut être rapportée pour lier entre elles ces deux extrémités libres. Une telle portion sécable empêche donc une extraction accidentelle des extrémités libres au travers de la gorge circulaire.

Selon un second exemple de réalisation de l'invention, l'un au moins des tenons peut comporter au moins un trou orienté transversalement par rapport à la direction longitudinale respective du ou des tenons.

Pour positionner les goupilles amovibles dans leurs positions de travail respectives, l'une au moins des deux extrémités libres peut être insérée au travers du ou des trous.

Les goupilles amovibles peuvent ainsi être formées par un matériau élastique, notamment un fil métallique. Par exemple, ces goupilles amovibles peuvent être de type "bêta", leur forme ressemblant à celle de la lettre grecque "β", ou également désignée en langue anglaise "R-clip" en raison de leur ressemblance avec la lettre "R".

Lors du positionnement de la ou des goupilles amovibles dans leurs positions de travail respectives, une fois le ou les trous traversés par l'une au moins des extrémités libres, une portion sécable peut être rapportée pour lier entre elles les deux extrémités libres. Une telle portion sécable empêche donc une extraction accidentelle d'une extrémité libre au travers du trou.

Par ailleurs et quelle que soit la réalisation de l'invention, la portion sécable peut être formée par un fil à casser.

Un tel fil à casser est en effet apte à relier les deux extrémités libres d'une goupille amovible et à se rompre lorsqu'un effort de traction d'une intensité prédéterminée est exercé sur la goupille amovible. Le fil à casser peut être avantageusement inséré dans des trous ménagés radialement dans chacune des deux extrémités libres d'une goupille amovible. Un tel fil à casser peut être également désigné par l'appellation de fil frein ou de fil à freiner. Ce fil à casser est avantageusement métallique et est calibré très précisément. En pratique, un tel fil à casser peut présenter un diamètre compris entre 0,1mm et 2mm et préférentiellement compris entre 0,5mm et 1, 5mm.

Selon un autre aspect de l'invention, l'ouverture pouvant comporter quatre côtés, le dispositif peut comporter huit organes éjecteurs positionnés deux à deux au niveau de chacun des quatre cotés de l'ouverture.

Un tel agencement permet en effet de repartir l'effort de poussée généré par les différents organes éjecteurs au niveau des quatre côtés formant le panneau d'aéronef.

La présente invention a aussi pour objet un aéronef selon la revendication 11.

Un tel aéronef permet ainsi de faciliter le largage d'un panneau en cas d'accident de l'aéronef.

L'invention et ses avantages apparaîtront avec plus de détails dans le cadre de la description qui suit avec des exemples donnés à titre illustratif en référence aux figures annexées qui représentent :
[Fig 1] la figure 1, une vue schématique de côté d'un aéronef conforme à l'invention,
[Fig 2] la figure 2, une première vue en perspective selon une orientation extérieure d'un dispositif conforme à l'invention,
[Fig 3] la figure 3, une deuxième vue en perspective selon une orientation intérieure d'un dispositif conforme à l'invention,
[Fig 4] la figure 4, une troisième vue en perspective selon l'orientation intérieure d'un dispositif conforme à l'invention,
[Fig 5] la figure 5, une quatrième vue en perspective selon l'orientation extérieure d'un dispositif conforme à l'invention,
[Fig 6] la figure 6, une vue en coupe d'un détail de fixation du dispositif conforme à l'invention,
[Fig 7] la figure 7, une vue en coupe d'une première variante de goupille amovible d'un dispositif conforme à l'invention,
[Fig 8] la figure 8, une vue en coupe d'une deuxième variante de goupille amovible d'un dispositif conforme à l'invention,
[Fig 9] la figure 9, une vue en coupe d'un dispositif de largage comportant une goupille amovible selon une troisième variante, conformément à l'invention, et
[Fig 10] la figure 10, une vue de dessus illustrant la troisième variante de goupille amovible d'un dispositif conforme à l'invention.

Les éléments présents dans plusieurs figures distinctes sont affectés d'une seule et même référence.

L'invention se rapporte donc au domaine des dispositifs de largage de panneaux d'aéronef et aux aéronefs ainsi équipés.

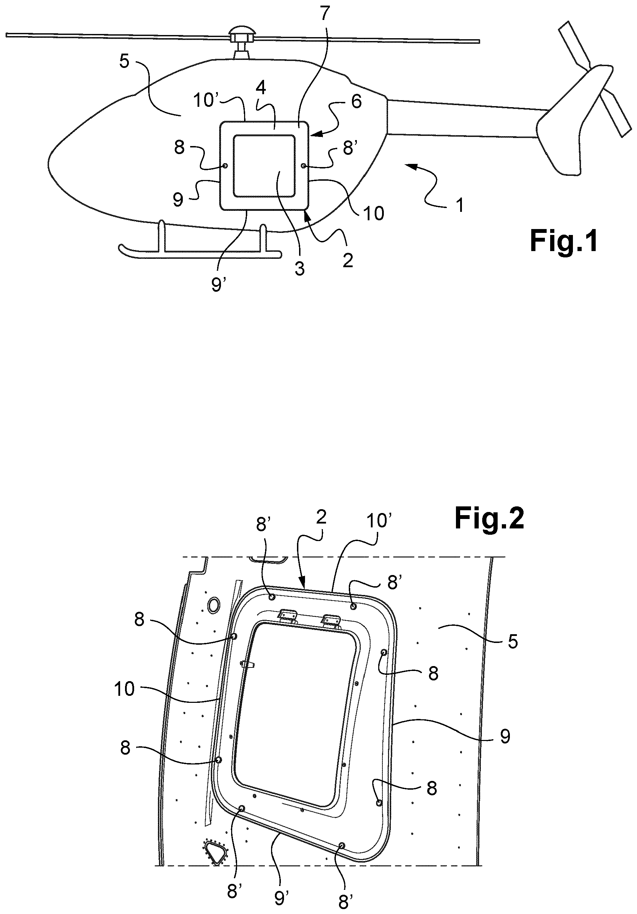

Tel que représenté à la figure 1, un aéronef 1 peut se présenter sous la forme d'un giravion et plus particulièrement d'un hélicoptère.

Un tel aéronef 1 comporte alors un dispositif 2 de largage d'un panneau 3 qui peut être avantageusement partiellement transparent ou translucide tel un hublot, une porte ou analogue. Un tel dispositif 2 comporte un cadre 4 configuré pour être solidarisé à un support 5 formant une structure ou un fuselage de l'aéronef 1. Un tel support 5 présente une ouverture 6, le cadre 4 est alors agencé au niveau d'une périphérie 7 de l'ouverture 6.

Un tel panneau 3 d'aéronef 1 est ainsi agencé au moins en regard du cadre 4 et permet de réaliser une fermeture étanche de l'ouverture 6.

Tel que représenté à la figure 1, un tel dispositif 2 comporte au moins deux organes éjecteurs 8 et 8' agencés de part et d'autre de l'ouverture 6 par exemple au niveau de deux côtés opposé 9 et 10. Selon une autre alternative représentée aux figures 2 à 5, un tel dispositif 2 peut comporter deux paires de deux organes éjecteurs 8 agencés au niveau de deux côtés opposé 9 et 10 et deux autres paires de deux organes éjecteurs 8' agencés au niveau de deux autres côtés opposé 9' et 10'.

En outre, les différents organes éjecteurs 8 et 8' sont avantageusement identiques entre eux.

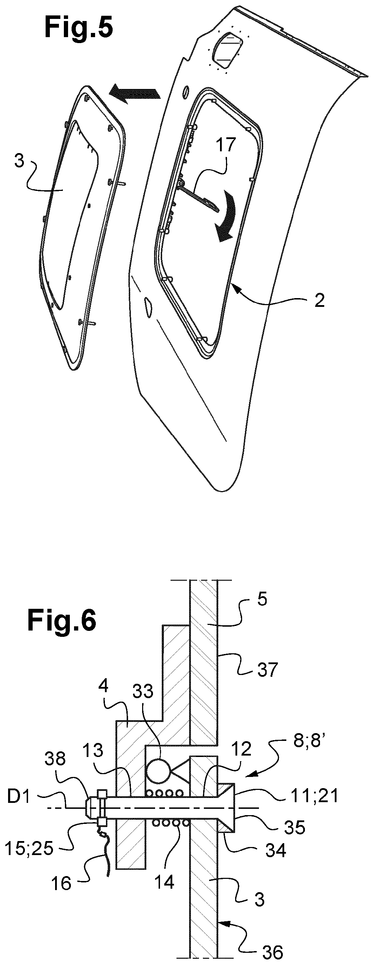

Tel que représenté à la figure 6, chaque organe éjecteur 8, 8' comporte un tenon 11, 21 orienté suivant une direction longitudinale D1 sensiblement perpendiculaire à la face externe du panneau 3. Ces tenons 11, 21 peuvent par exemple traverser d'une part un premier orifice 12 du panneau 3 et d'autre part un second orifice 13 du cadre 4.

Par ailleurs, un ressort 14 hélicoïdal est précontraint en compression selon la direction longitudinale D1 et est agencé entre le panneau 3 et le cadre 4. Un tel ressort 14 est en outre agencé coaxialement autour du tenon 11, 21.

Chaque organe éjecteur 8, 8' comporte également une goupille amovible 15, 25 qui est avantageusement agencée à l'intérieur de l'aéronef 1. Chaque goupille amovible 15, 25 coopère avec un tenon 11, 21. Une telle goupille amovible 15, 25 est configurée pour d'une part, dans une position de travail, maintenir en position le tenon 11, 21 et permettre au panneau 3 d'être solidarisé au support 5 et d'autre part, dans une position de largage, libérer le tenon 11, 21 pour par exemple permettre à une personne de sortir en urgence de l'aéronef 1 suite à un accident.

En outre, un ou plusieurs joints d'étanchéité 33 peuvent être agencés entre le panneau 3 et le cadre 4 et sur toute la périphérie du cadre 4 pour garantir la fermeture étanche réalisée par le panneau 3 avant son éventuel largage.

Chaque tenon 11, 21 peut comporter avantageusement une tête 35. La tête 35 peut être fraisée et configurée pour coopérer avec une rondelle cuvette 34 agencée au contact d'une face externe 36 du panneau 3 en regard d'un côté extérieur à l'aéronef 1.

En outre des moyens de réglage non représentés peuvent également permettre de régler l'affleurement de la face externe 36 du panneau 3 avec la surface extérieure 37 du support 5 de l'aéronef 1.

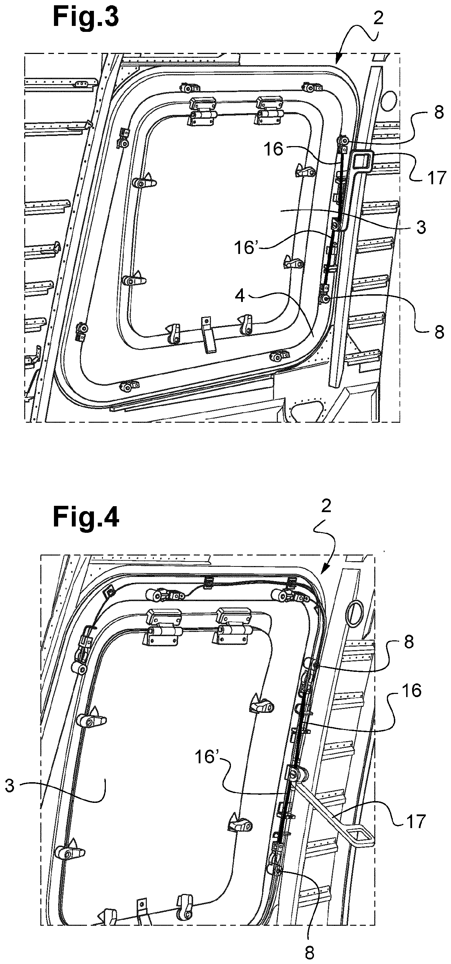

Tel que représenté aux figures 3 et 4, le dispositif 2 comporte également au moins un lien 16, 16' relié aux goupilles amovibles 15, 25 des au moins deux organes éjecteurs 8, 8'. Ces liens 16, 16' peuvent par exemple être agencés en série l'un après l'autre pour actionner deux goupilles amovibles 15, 25 de deux organes éjecteurs 8, 8' distincts. Les liens 16, 16' peuvent également être agencés en parallèles l'un par rapport à l'autre et permettent alors d'actionner individuellement deux goupilles amovibles 15, 25.

Par ailleurs, le dispositif 2 comporte au moins un organe de commande 17, tel un levier, pour exercer manuellement un effort de traction sur le ou les liens 16, 16' et pour agencer simultanément en position de largage les goupilles amovibles 15, 25 des au moins deux organes éjecteurs 8, 8'. Un tel organe de commande 17 comporte avantageusement un degré de mobilité en rotation par rapport au cadre 4.

Tel que représenté à la figure 5, une fois l'organe de commande 17 actionné manuellement par une personne, le panneau 3 est éjecté vers l'extérieur de l'aéronef 1 selon la direction longitudinale D1 de chacun des tenons 11, 21 allant de sa tête 35 à son pied 38.

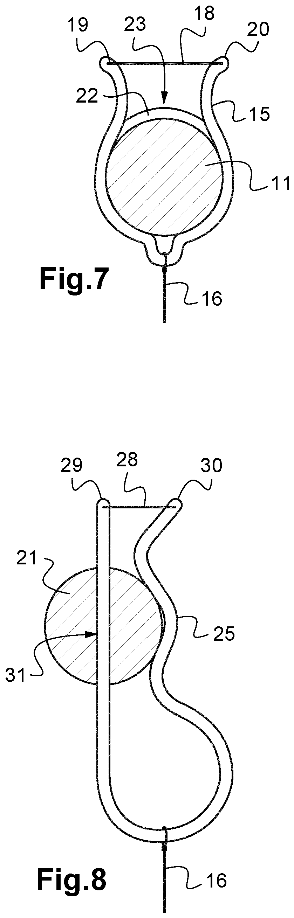

Comme représentées aux figures 7 et 8, une fois mises en place sur leurs tenons respectifs, les goupilles amovibles 15, 25 peuvent être équipées chacune d'une portion sécable 18, 28, chaque portion sécable 18, 28 étant configurée pour être cassée à partir d'une valeur de seuil prédéterminée de l'effort de traction exercé par l'organe de commande 17 sur le ou les liens 16, 16'. En outre, lorsque les portions sécables 18, 28 sont cassées, les goupilles amovibles 15, 25 passent respectivement de leurs positions de travail à leurs positions de largage.

De plus, les goupilles amovibles 15, 25 comportent chacune deux extrémités libres 19, 20, 29, 30, chaque portion sécable 18, 28 rejoignant les deux extrémités libres 19, 20, 29, 30. Une telle portion sécable 18, 28 peut avantageusement comporter un fil à casser ou autre configuré pour être cassé à partir d'un effort de traction prédéterminé. Un tel fil à casser est avantageusement métallique et présente un diamètre compris préférentiellement entre 0,5mm et 1,5mm.

Une première variante de goupille amovible 15 est représentée à la figure 7. Dans ce cas, ce tenon 11 comporte une gorge circulaire 22 agencée au niveau d'une face cylindrique externe 23 du tenon 11. Les deux extrémités libres 19, 20 sont insérées dans la gorge circulaire 22 pour positionner la goupille amovible 15 dans sa position de travail.

De telles de goupilles amovibles 15 peuvent ainsi présenter une forme de lyre ou d'Oméga.

Telle que présentée à la figure 8, selon une deuxième variante de goupille amovible 25, le tenon 21 peut comporter au moins un trou 31 orienté transversalement par rapport à la direction longitudinale D1 de ce tenon 21. Ainsi, pour positionner la goupille amovible 25 dans sa position de travail, on introduit l'une au moins des deux extrémités libres 29, 30 au travers du trou 31.

Selon cette deuxième variante, les goupilles amovibles 25 peuvent ainsi présenter une forme de Béta ou de R. D'autres variantes de goupilles amovibles insérées dans un trou 31 d'un tenon 21 non représentées sont envisageables et peuvent par exemple se présenter sous la forme d'une tige cylindrique dont l'une des extrémités est solidarisée à un lien 16 et l'autre extrémité est solidarisée avec un point fixe du cadre 4, éventuellement avec une portion sécable interposée.

De telles goupilles amovibles 15, 25 peuvent par exemple être formées par des fils métalliques sensiblement élastiques pour pouvoir se déformer et être mis en place respectivement sur leur tenon 11, 21.

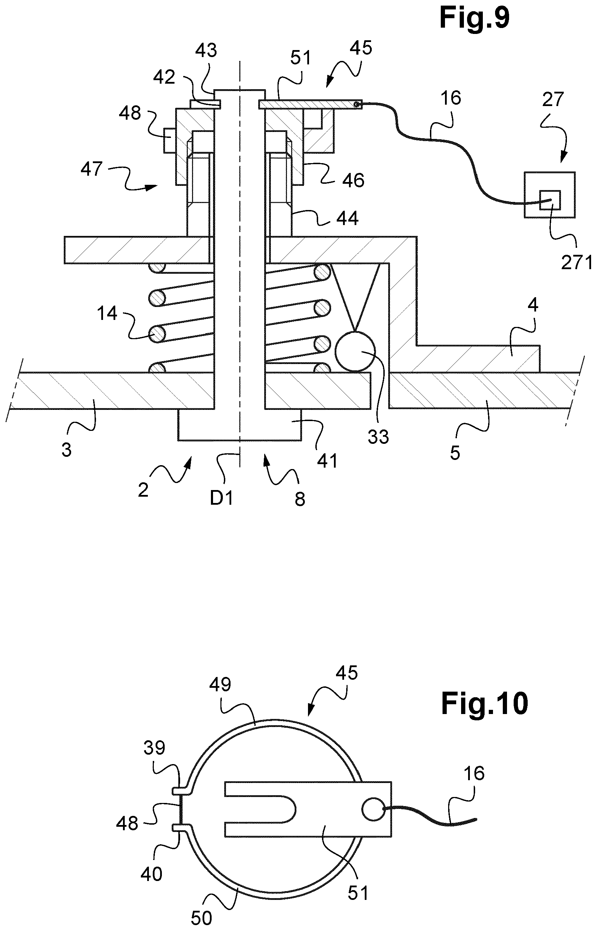

Telle que présentée à la figure 9, selon une troisième variante de goupille amovible 45, elles peuvent également être formées par des tôles repliées sur elles mêmes.

Le tenon 41 peut comporter une gorge circulaire 42 agencée au niveau d'une face cylindrique externe 43.

La goupille amovible 45 présente alors une fourche 51 destinée à coopérer avec la gorge circulaire 42.

En outre, l'organe éjecteur 8 comporte dans ce cas un moyen de réglage 47 permettant d'une part d'ajuster un affleurement entre le panneau 3 et la structure 5 et d'autre part de précontraindre le ressort 14. De plus, l'étanchéité réalisée par le joint 33 peut ainsi être garantie et ajustée.

Un tel moyen de réglage 47 comporte un fourreau fileté 44 coopérant avec une bobine taraudée 46. Le vissage ou le dévissage de la bobine taraudée 46 sur le fourreau fileté 44 peut être réalisé classiquement au moyen d'une clé et permet de modifier la distance entre la face d'appui de la fourche 51 une face intérieure du cadre 4 sur laquelle prend appui le fourreau fileté 44. Le fourreau fileté 44 et la bobine taraudée 46 sont agencés coaxialement par rapport au tenon 41.

Telle que représentée à la figure 10, la goupille amovible 45 comporte également deux portions déformables 49, 50 solidarisées avec la fourche 51. Ces deux portions déformables 49, 50 coopèrent par ailleurs avec une surface externe de la bobine taraudée 46.

Telles que représentées, les extrémités libres 39, 40 des deux portions déformables 49, 50 peuvent être agencées en regard l'une de l'autre et être reliées entre elles par une portion sécable 48 telle un fil à casser lorsque la goupille 45 est agencée dans sa position de travail.

Par ailleurs, tel que représenté à la figure 9, l'organe de commande 27 peut comporter au moins un actionneur 271 configuré pour être piloté à distance. L'actionneur 271 peut dès lors être piloté automatiquement lorsque par exemple une situation d'urgence est identifiée par une unité de contrôle ou encore être piloté par un pilote de l'aéronef 1 souhaitant actionner le dispositif 2 de largage par exemple depuis un cockpit de l'aéronef 1.

Un tel actionneur 271 est alors apte à recevoir une consigne de commande, par exemple électrique, et exercer un effort de traction sur le lien 16 pour agencer la goupille amovible 45 dans la position de largage. En outre, un organe de commande 17 à actionnement manuel tel que décrit précédemment peut bien entendu être combiné avec l'actionneur 271 piloté à distance.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, dans la mesure où cela reste dans le cadre des revendications annexées.

## Revendications

1. Dispositif (2) de largage d'un panneau (3) d'aéronef (1), ledit dispositif (2) étant configuré pour être solidarisé à un support (5), ledit support (5) présentant une ouverture (6) et ledit dispositif (2) étant rapporté en recouvrement d'une périphérie (7) de ladite ouverture (6), ledit dispositif (2) comportant :
- un panneau (3) configuré pour être agencé au moins en regard de ladite ouverture (6),
- au moins deux organes éjecteurs (8, 8'), chacun desdits au moins deux organes éjecteurs (8, 8') comportant :
• un tenon (11, 21, 41) s'étendant suivant une direction longitudinale (D1) orientée perpendiculairement par rapport audit panneau (3),
• un ressort (14) précontraint en compression suivant ladite direction longitudinale (D1), ledit ressort (14) étant agencé coaxialement autour dudit tenon (11, 21, 41) et,
• une goupille amovible (15, 25, 45) coopérant avec ledit tenon (11, 21, 41), ladite goupille amovible (15, 25, 45) étant configurée pour d'une part, dans une position de travail, maintenir en position ledit tenon (11, 21, 41) et permettre audit panneau (3) d'être solidarisé audit support (5) et d'autre part, dans une position de largage, libérer ledit tenon (11, 21, 41),
- au moins un lien (16, 16') relié auxdites goupilles amovibles (15, 25, 45) desdits au moins deux organes éjecteurs (8, 8'), et
- au moins un organe de commande (17, 27) pour exercer un effort de traction sur ledit au moins un lien (16, 16') et pour agencer simultanément dans leurs positions de largage respectives lesdites goupilles amovibles (15, 25, 45) desdits au moins deux organes éjecteurs (8, 8'),
**caractérisé en ce que** ledit dispositif (2) comporte un cadre (4) configuré pour être solidarisé audit support (5), ledit cadre (4) étant interposé entre ledit support (5) et ledit panneau (3), lesdits ressorts (14) desdits au moins deux organes éjecteurs (8, 8') étant respectivement agencés entre ledit cadre (4) et ledit panneau (3).

2. Dispositif selon la revendication 1,
**caractérisé en ce que** ledit au moins un organe de commande (17) est configuré pour être actionné manuellement.

3. Dispositif selon la revendication 2,
**caractérisé en ce que** ledit au moins un organe de commande (17) comporte un degré de mobilité en rotation par rapport audit cadre (4).

4. Dispositif selon la revendication 1,
**caractérisé en ce que** ledit au moins un organe de commande (27) comporte au moins un actionneur (271) configuré pour être piloté à distance.

5. Dispositif selon l'une quelconque des revendications 1 à 4,
**caractérisé en ce que** l'une au moins desdites goupilles amovibles (15, 25, 45) comporte une portion sécable (18, 28, 48), ladite portion sécable (18, 28, 48) étant configurée pour être cassée à partir d'une valeur de seuil prédéterminée dudit effort de traction, et **en ce que** lorsque ladite portion sécable (18, 28, 48) est cassée, ladite au moins une goupille amovible (15, 25, 45) passe de ladite position de travail à ladite position de largage.

6. Dispositif selon la revendication 5,
**caractérisé en ce que** ladite au moins une desdites goupilles amovibles (15, 25, 45) comporte deux extrémités libres (19, 20, 29, 30, 39, 40), chaque portion sécable (18, 28, 48) étant solidarisée avec lesdites deux extrémités libres (19, 20, 29, 30, 39, 40) une fois ladite au moins une goupille amovible (15, 25, 45) agencée dans ladite position de travail.

7. Dispositif selon la revendication 6,
**caractérisé en ce que** l'un au moins desdits tenons (11) comporte au moins une gorge circulaire (22) agencée au niveau d'une face cylindrique externe (23) dudit au moins un tenon (11) et **en ce que**, pour positionner ladite au moins une goupille amovible (15) dans ladite position de travail, lesdites deux extrémités libres (19, 20) sont insérées dans ladite au moins une gorge circulaire (22).

8. Dispositif selon l'une quelconque des revendications 5 à 6,
**caractérisé en ce que** l'un au moins desdits tenons (21) comporte au moins un trou (31) orienté transversalement par rapport à ladite direction longitudinale (D1) dudit au moins un tenon (21) et **en ce que**, pour positionner ladite au moins une goupille amovible (25) dans ladite position de travail, l'une au moins desdites deux extrémités libres (29, 30) est insérée au travers dudit au moins un trou (31).

9. Dispositif selon l'une quelconque des revendications 5 à 8,
**caractérisé en ce que** ladite portion sécable (18, 28, 48) est formée par un fil à casser.

10. Dispositif selon l'une quelconque des revendications 1 à 9,
**caractérisé en ce que**, ladite ouverture (6) comportant quatre côtés (9, 10, 9', 10'), ledit dispositif (2) comporte huit organes éjecteurs (8, 8') positionnés deux à deux au niveau de chacun desdits quatre cotés (9, 10, 9', 10') de ladite ouverture (6).

11. Aéronef (1) comportant un support (5) présentant une ouverture (6) et un dispositif (2) de largage d'un panneau (3) d'aéronef (1), ledit dispositif (2) étant solidarisé audit support (5) et étant rapporté en recouvrement d'une périphérie (7) de ladite ouverture (6), ledit panneau (3) étant agencé au moins en regard de ladite ouverture (6),
**caractérisé en ce que** ledit dispositif (2) est selon l'une quelconque des revendications 1 à 10.

## Patentansprüche

1. Vorrichtung (2) zum Abwerfen einer Platte (3) eines Luftfahrzeugs (1), wobei die Vorrichtung (2) konfiguriert ist, um fest mit einem Träger (5) verbunden zu werden, wobei der Träger (5) eine Öffnung (6) aufweist und die Vorrichtung (2) einen Rand (7) der Öffnung (6) überdeckend angebracht ist, wobei die Vorrichtung (2) umfasst:
- eine Platte (3), die konfiguriert ist, um zumindest vor der Öffnung (6) angeordnet zu werden,
- mindestens zwei Auswerforgane (8, 8'), wobei jedes der mindestens zwei Auswerforgane (8, 8') umfasst :
• einen Zapfen (11, 21, 41), der sich in einer Längsrichtung (D1) erstreckt, die senkrecht zu der Platte (3) ausgerichtet ist,
• eine Feder (14), die in der Längsrichtung (D1) auf Druck vorgespannt ist, wobei die Feder (14) koaxial um den Zapfen (11, 21, 41) herum angeordnet ist, und,
• einen entfernbaren Stift (15, 25, 45), der mit dem Zapfen (11, 21, 41) zusammenwirkt, wobei der entfernbare Stift (15, 25, 45) konfiguriert ist, um einerseits in einer Arbeitsposition den Zapfen (11, 21, 41) in Position zu halten und es der Platte (3) zu ermöglichen, fest mit dem Träger (5) verbunden zu werden, und andererseits in einer Abwurfposition den Zapfen (11, 21, 41) freizugeben,
- mindestens ein Verbindungsstück (16, 16'), das mit den beweglichen Stiften (15, 25, 45) der mindestens zwei Auswerforgane (8, 8') verbunden ist, und
- mindestens ein Steuerorgan (17, 27) zum Ausüben einer Zugkraft auf das mindestens eine Verbindungsstück (16, 16') und zum gleichzeitigen Anordnen der entfernbaren Stifte (15, 25, 45) der mindestens zwei Auswerforgane (8, 8') in ihren jeweiligen Abwurfpositionen,
**dadurch gekennzeichnet, dass** die Vorrichtung (2) einen Rahmen (4) umfasst, der konfiguriert ist, um fest mit dem Träger (5) verbunden zu werden, wobei der Rahmen (4) zwischen dem Träger (5) und der Platte (3) eingefügt ist, wobei die Federn (14) der mindestens zwei Auswerforgane (8, 8') jeweils zwischen dem Rahmen (4) und der Platte (3) angeordnet sind.

2. Vorrichtung nach Anspruch 1,
**dadurch gekennzeichnet, dass** das mindestens eine Steuerorgan (17) zur manuellen Betätigung konfiguriert ist.

3. Vorrichtung nach Anspruch 2,
**dadurch gekennzeichnet, dass** das mindestens eine Steuerorgan (17) einen Drehfreiheitsgrad in Bezug auf den Rahmen (4) aufweist.

4. Vorrichtung nach Anspruch 1,
**dadurch gekennzeichnet, dass** das mindestens eine Steuerorgan (27) mindestens ein Stellglied (271) umfasst, das konfiguriert ist, um ferngesteuert zu werden.

5. Vorrichtung nach einem der Ansprüche 1 bis 4,
**dadurch gekennzeichnet, dass** mindestens einer der entfernbaren Stifte (15, 25, 45) einen Abbrechabschnitt (18, 28, 48) aufweist, wobei der Abbrechabschnitt (18, 28, 48) konfiguriert ist, um ab einem vorgegebenen Schwellenwert der Zugkraft abzubrechen, und dass, wenn der Abbrechabschnitt (18, 28, 48) abgebrochen ist, der mindestens eine entfernbare Stift (15, 25, 45) von der Arbeitsposition in die Abwurfposition übergeht.

6. Vorrichtung nach Anspruch 5,
**dadurch gekennzeichnet, dass** der mindestens eine der entfernbaren Stifte (15, 25, 45) zwei freie Enden (19, 20, 29, 30, 39, 40) aufweist, wobei jeder Abbrechabschnitt (18, 28, 48) mit den beiden freien Enden (19, 20, 29, 30, 39, 40) fest verbunden ist, sobald der mindestens eine entfernbare Stift (15, 25, 45) in der Arbeitsposition angeordnet ist.

7. Vorrichtung nach Anspruch 6,
**dadurch gekennzeichnet, dass** mindestens einer der Zapfen (11) mindestens eine kreisförmige Nut (22) aufweist, die an einer zylindrischen Außenfläche (23) des mindestens einen Zapfens (11) angeordnet ist, und dass zum Positionieren des mindestens einen entfernbaren Stifts (15) in der Arbeitsposition die beiden freien Enden (19, 20) in die mindestens eine kreisförmige Nut (22) eingeführt sind.

8. Vorrichtung nach einem der Ansprüche 5 bis 6,
**dadurch gekennzeichnet, dass** mindestens einer der Zapfen (21) mindestens ein Loch (31) aufweist, das quer zu der Längsrichtung (D1) des mindestens einen Zapfens (21) ausgerichtet ist, und dass zum Positionieren des mindestens einen entfernbaren Stifts (25) in der Arbeitsposition mindestens eines der beiden freien Enden (29, 30) durch das mindestens eine Loch (31) hindurch eingeführt wird.

9. Vorrichtung nach einem der Ansprüche 5 bis 8,
**dadurch gekennzeichnet, dass** der Abbrechabschnitt (18, 28, 48) durch einen abbrechbaren Draht gebildet ist.

10. Vorrichtung nach einem der Ansprüche 1 bis 9,
**dadurch gekennzeichnet, dass** die Öffnung (6) vier Kanten (9, 10, 9', 10') und die Vorrichtung (2) acht Auswerforgane (8, 8') aufweist, die paarweise an jeder der vier Kanten (9, 10, 9', 10') der Öffnung (6) positioniert sind.

11. Luftfahrzeug (1) mit einem Träger (5), der eine Öffnung (6) aufweist, und einer Vorrichtung (2) zum Abwerfen einer Platte (3) des Luftfahrzeugs (1), wobei die Vorrichtung (2) fest mit dem Träger (5) verbunden ist und einen Rand (7) der Öffnung (6) überdeckend angebracht ist, wobei die Platte (3) zumindest gegenüber der Öffnung (6) angeordnet ist,
**dadurch gekennzeichnet, dass** die Vorrichtung (2) nach einem der Ansprüche 1 bis 10 ist.

## Claims

1. Device (2) for releasing a panel (3) of an aircraft (1), said device (2) being configured to be secured to a support (5), said support (5) having an opening (6) and said device (2) being applied in order to cover a periphery (7) of said opening (6), said device (2) comprising:
- a panel (3) configured to be arranged at least opposite said opening (6),
- at least two ejector components (8, 8'), each of said at least two ejector components (8, 8') comprising:
• a stud (11, 21, 41) extending in a longitudinal direction (D1) oriented perpendicularly relative to said panel (3),
• a compression pre-stressed spring (14) in said longitudinal direction (D1), said spring (14) being coaxially arranged around said stud (11, 21, 41) and,
• a detachable pin (15, 25, 45) engaging with said stud (11, 21, 41), said detachable pin (15, 25, 45) being configured, on the one hand, in a working position, to hold said stud (11, 21, 41) in position and to allow said panel (3) to be secured to said support (5) and, on the other hand, in a release position, to release said stud (11, 21, 41),
- at least one link (16, 16') connected to said detachable pins (15, 25, 45) of said at least two ejector components (8, 8'), and
- at least one control component (17, 27) for exerting a tensile force on said at least one link (16, 16') and for simultaneously arranging said detachable pins (15, 25, 45) of said at least two ejector components (8, 8') in their respective release positions, **characterized in that** said device (2) comprises a frame (4) configured to be secured to said support (5), said frame (4) being interposed between said support (5) and said panel (3), said springs (14) of said at least two ejector components (8, 8') being respectively arranged between said frame (4) and said panel (3).

2. Device according to Claim 1,
**characterized in that** said at least one control component (17) is configured to be activated manually.

3. Device according to Claim 2,
**characterized in that** said at least one control component (17) comprises a degree of rotational mobility relative to said frame (4).

4. Device according to Claim 1,
**characterized in that** said at least one control component (27) comprises at least one actuator (271) configured to be remotely controlled.

5. Device according to any one of Claims 1 to 4,
**characterized in that** at least one of said detachable pins (15, 25, 45) comprises a breakable portion (18, 28, 48), said breakable portion (18, 28, 48) being configured to be broken from a predetermined threshold value of said tensile force, and **in that**, when said breakable portion (18, 28, 48) is broken, said at least one detachable pin (15, 25, 45) transitions from said working position to said release position.

6. Device according to Claim 5,
**characterized in that** said at least one of said detachable pins (15, 25, 45) comprises two free ends (19, 20, 29, 30, 39, 40), each breakable portion (18, 28, 48) being secured to said two free ends (19, 20, 29, 30, 39, 40) once said at least one detachable pin (15, 25, 45) is arranged in said working position.

7. Device according to Claim 6,
**characterized in that** at least one of said studs (11) comprises at least one circular groove (22) arranged in the vicinity of an external cylindrical face (23) of said at least one stud (11) and **in that**, in order to position said at least one detachable pin (15) in said working position, said two free ends (19, 20) are inserted into said at least one circular groove (22).

8. Device according to any one of Claims 5 to 6,
**characterized in that** at least one of said studs (21) comprises at least one hole (31) transversely oriented relative to said longitudinal direction (D1) of said at least one stud (21) and **in that**, in order to position said at least one detachable pin (25) in said working position, at least one of said two free ends (29, 30) is inserted through said at least one hole (31).

9. Device according to any one of Claims 5 to 8,
**characterized in that** said breakable portion (18, 28, 48) is formed by a breakable wire.

10. Device according to any one of Claims 1 to 9,
**characterized in that**, with said opening (6) comprising four sides (9, 10, 9', 10'), said device (2) comprises eight ejector components (8, 8') positioned pairwise in the vicinity of each of said four sides (9, 10, 9', 10') of said opening (6).

11. Aircraft (1) comprising a support (5) having an opening (6) and a device (2) for releasing a panel (3) of the aircraft (1), said device (2) being secured to said support (5) and being applied in order to cover a periphery (7) of said opening (6), said panel (3) being arranged at least opposite said opening (6),
**characterized in that** said device (2) is a device according to any one of Claims 1 to 10.
